# EUROPEAN PATENT APPLICATION

(11) **EP 4 525 365 A1**
(43) Date of publication of application: **19.03.2025**
(21) Application number: 23862066.0
(22) Date of filing: 21.07.2023
(51) Int. Cl.: H04L 9/40

(54) **OFFLINE IDENTITY VERIFICATION METHOD AND APPARATUS, STORAGE MEDIUM, AND ELECTRONIC DEVICE**

(30) Priority: 07.09.2022 CN 202211090136
(71) Applicant: Alipay (Hangzhou) Information Technology Co., Ltd., Hangzhou, Zhejiang 310000 (CN)
(72) Inventor: XU, Dengwei, Hangzhou, Zhejiang 310000 (CN); CUI, Xianjun, Hangzhou, Zhejiang 310000 (CN); XIN, Zhi, Hangzhou, Zhejiang 310000 (CN); WAN, Xiaofei, Hangzhou, Zhejiang 310000 (CN); WANG, Baihang, Hangzhou, Zhejiang 310000 (CN)
(74) Representative: Fish & Richardson P.C.
(86) International application number: PCT/CN2023/108734
(87) International publication number: WO 2024/051365

(57) **Abstract**

This specification discloses an offline identity verification method and apparatus, a storage medium, and an electronic device. Identity information to be verified of a user that is collected by a terminal device in an offline state is obtained, the identity information to be verified is signed to obtain signed identity information to be verified, the signed identity information to be verified is sent to a secure environment, signature verification is performed on the signed identity information to be verified in the secure environment, the identity information to be verified is compared with standard identity information stored in the secure environment after signature verification on the signed identity information to be verified is passed, to obtain a first comparison result, and offline identity verification is performed on the user according to the first comparison result.

## Description

### TECHNICAL FIELD

This specification relates to the field of computer technologies, and in particular, to offline identity verification methods and apparatuses, storage media, and electronic devices.

### BACKGROUND

With rapid development of the Internet, private privacy data are receiving increasing attention from the public. To ensure security of user data, during service execution, identity verification can be performed on a user by using a collected biometric feature such as a user fingerprint, a face, or an iris. A specific process is as follows: A terminal device sends a collected biometric feature to a server, and the server compares the biometric feature sent by the terminal device with a previously stored biometric feature entered by a user. After the comparison succeeds, it is determined that identity verification on the user is passed.

However, a current identity verification manner cannot effectively perform identity verification on a user.

### SUMMARY

This specification provides offline identity verification methods and apparatuses, storage media, and electronic devices, so as to alleviate a problem in a related art that secure identity verification cannot be effectively performed on a user.

This specification uses the following technical solutions: This specification provides an offline identity verification method, where the method is applied to a terminal device, a secure environment is disposed in the terminal device, and the secure environment and another system environment in the terminal device are data-isolated from each other; and the method includes: obtaining, in response to an offline payment request of a user, identity information to be verified of the user that is collected by the terminal device in an offline state; signing the identity information to be verified to obtain signed identity information to be verified; sending the signed identity information to be verified to the secure environment, so signature verification is performed on the signed identity information to be verified in the secure environment, and after signature verification on the signed identity information to be verified is passed, the identity information to be verified is compared with standard identity information stored in the secure environment to obtain a first comparison result; and performing offline identity verification on the user according to the first comparison result.

Optionally, the obtaining, in response to an offline payment request of a user, identity information to be verified of the user that is collected by the terminal device in an offline state includes: monitoring, in response to the offline payment request of the user, whether the user enables a permission to perform offline payment in an offline identity verification manner; and if it is determined that the user enables the permission, obtaining the identity information to be verified of the user that is collected by the terminal device in the offline state.

Optionally, the method further includes: collecting, in response to a permission enabling request sent by the user in an online state for the permission, standard identity information entered by the user; and sending the standard identity information to a server, so the server stores the standard identity information.

Optionally, the signing the identity information to be verified specifically includes: digitally signing the identity information to be verified by using a service private key.

Optionally, the performing signature verification on the signed identity information to be verified specifically includes: performing signature verification, in the secure environment, on the signed identity information to be verified by using a service public key stored in the secure environment.

Optionally, the signing the identity information to be verified to obtain signed identity information to be verified specifically includes: encrypting the identity information to be verified to obtain encrypted identity information to be verified; and signing the encrypted identity information to be verified to obtain signed identity information to be verified; and the comparing the identity information to be verified with standard identity information stored in the secure environment to obtain a first comparison result specifically includes: comparing the encrypted identity information to be verified with encrypted standard identity information stored in the secure environment to obtain the first comparison result.

Optionally, the sending the standard identity information to a server, so the server stores the standard identity information specifically includes: sending the standard identity information and a pre-generated service public key to the server, so the server stores the standard identity information and the service public key; and the method further includes: obtaining, in response to a payment request sent by the user in the online state, second identity information to be verified of the user that is collected by the terminal device in the online state; signing the second identity information to be verified by using a service private key, to obtain signed second identity information to be verified; and sending the signed second identity information to be verified to the server, so the server performs signature verification, by using the service public key, on the signed second identity information to be verified, and compares the second identity information to be verified with the standard identity information stored in the server after signature verification on the signed second identity information to be verified is passed, to obtain a second comparison result, so as to perform online identity verification on the user according to the second comparison result.

This specification provides an offline identity verification apparatus, where a secure environment is disposed in the apparatus, and the secure environment and another system environment in the apparatus are data-isolated from each other; and the apparatus includes: an acquisition module, configured to: obtain, in response to an offline payment request of a user, identity information to be verified of the user that is collected by the apparatus in an offline state; a signing module, configured to sign the identity information to be verified to obtain signed identity information to be verified; a comparison module, configured to: send the signed identity information to be verified to the secure environment, so signature verification is performed on the signed identity information to be verified in the secure environment, and after signature verification on the signed identity information to be verified is passed, the identity information to be verified is compared with standard identity information stored in the secure environment to obtain a first comparison result; and a verification module, configured to perform offline identity verification on the user according to the first comparison result.

This specification provides a computer-readable storage medium, where the storage medium stores a computer program, and the computer program is executed by a processor to implement the above-mentioned offline identity verification method.

This specification provides an electronic device, including a memory, a processor, and a computer program that is stored in the memory and that can run on the processor, where the processor executes the program to implement the above-mentioned offline identity verification method.

The above-mentioned at least one technical solution used in this specification can achieve the following beneficial effects: In the offline identity verification method provided in this specification, identity information to be verified of a user that is collected by a terminal device in an offline state is obtained, the identity information to be verified is signed to obtain signed identity information to be verified, the signed identity information to be verified is sent to a secure environment, signature verification is performed on the signed identity information to be verified in the secure environment, the identity information to be verified is compared with standard identity information stored in the secure environment after signature verification on the signed identity information to be verified is passed, to obtain a first comparison result, and offline identity verification is performed on the user according to the first comparison result.

It can be understood from the above-mentioned method that, in the offline state, because the standard identity information used by the user for identity verification is pre-stored in the local secure environment, when the user is in the offline state, the identity information to be verified of the user can still be collected. By comparing the identity information to be verified of the user and the standard identity information in the local secure environment, offline identity verification on the user is completed, thereby ensuring that the user can still perform identity verification in the offline state, thereby improving service execution efficiency and bringing convenience to the user. In addition, the standard identity information is stored in the secure environment, and comparison between the identity information to be verified of the user and the standard identity information is also completed in the secure environment. As such, it can be ensured that privacy data of the user is not leaked, and information security of the user is further ensured.

### BRIEF DESCRIPTION OF DRAWINGS

The accompanying drawings described here are used to provide a further understanding of this specification, and constitute a part of this specification. Example embodiments of this specification and descriptions of the embodiments are used to explain this specification, and do not constitute an inappropriate limitation on this specification.
FIG. 1 is a schematic flowchart illustrating an offline identity verification method, according to this specification.
FIG. 2 is a schematic diagram illustrating a running manner of a terminal device of an offline identity verification method, according to this specification.
FIG. 3 is a schematic diagram illustrating an apparatus for an offline identity verification method, according to this specification.
FIG. 4 is a schematic diagram illustrating an electronic device corresponding to FIG. 1, according to this specification.

### DESCRIPTION OF EMBODIMENTS

To make the objectives, technical solutions, and advantages of this specification clearer, the following clearly and comprehensively describes the technical solutions of this specification with reference to specific embodiments of this specification and corresponding accompanying drawings. It is clear that the described embodiments are merely some but not all of embodiments of this specification. Based on embodiments of this specification, all other embodiments obtained by a person of ordinary skill in the art without creative efforts fall within the protection scope of this specification.

The following describes in detail the technical solutions provided in embodiments of this specification with reference to the accompanying drawings.

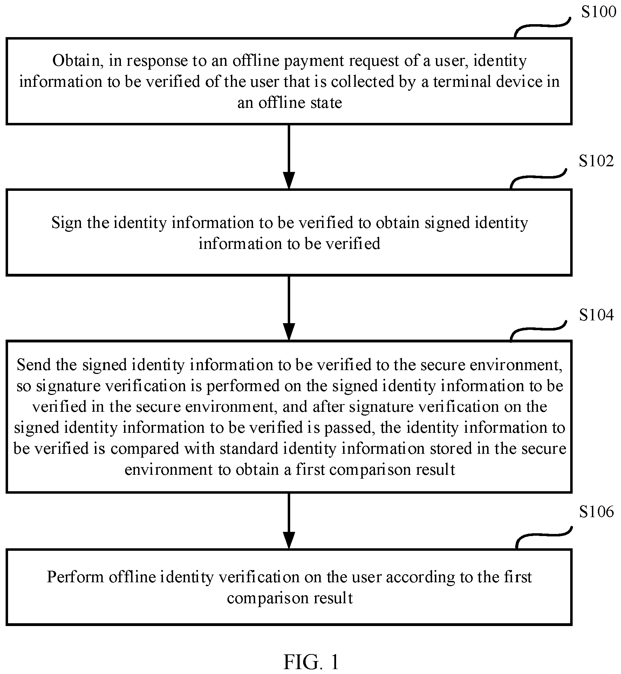

FIG. 1 is a schematic flowchart illustrating an offline identity verification method, according to this specification, including step S100 to step S106.

S100: Obtain, in response to an offline payment request of a user, identity information to be verified of the user that is collected by a terminal device in an offline state.

In real life, the user may face a scenario in which a service is executed in a different environment. For example, when in a poor network or no network environment, the user and a merchant perform face-to-face payment, or the user completes a payment operation on shopping software. In a process of performing a payment service, to ensure security of a user account and privacy data of the user, identity verification needs to be performed on the user. Based on this, this application is applied to an offline environment, so the user can still complete identity verification in an offline state.

For example, the user initiates a payment request by using a client device when performing the payment service part. In this case, if the client device detects that the user is currently in the offline state, the client device can perform identity verification on the user in the offline identity verification manner provided in this application. For example, the user performs offline identity verification by using fingerprint information. Specifically, in an identity verification process, the client device can pop up an identity verification interface, and the interface displays, to the user, a text or image prompt for entering a fingerprint, so as to guide the user to enter fingerprint information according to the prompt. The fingerprint information collected by the client device is identity information to be verified of the user that is collected by the terminal device in the offline state.

In this specification, the terminal device can include a mobile device such as a mobile phone or a tablet computer. To identity information to be verified refers to biometric feature information, including a fingerprint, a face, iris data, etc. The offline verification method provided in this specification is applicable to any type of biological feature information. For ease of description, the following uses only the fingerprint information of the user as an example of the identity information to be verified of the user, but the identity information to be verified of the user is not limited to the fingerprint information.

It is worthwhile to note that in an actual application, to perform identity verification in the offline state to perform a payment service, the user needs to first enable a permission to perform offline payment in an offline identity verification manner. Therefore, after the offline payment request sent by the user is monitored, it is necessary to determine whether the user enables the permission to perform offline payment in the offline identity verification manner. If the user does not enable the permission, user authorization is needed to enable the permission. If determining that the user has enabled the permission to perform offline payment in the offline identity verification manner, the client device can perform identity verification on the user in the offline identity verification manner provided in this application.

S102: Sign the identity information to be verified to obtain signed identity information to be verified.

In the process of performing the payment service, after the user enters the fingerprint information, the client device obtains the fingerprint information of the user that is collected by the terminal device in the offline state. To ensure security in the service execution process, before the fingerprint information to be verified is subsequently verified, the fingerprint information to be verified needs to be signed. Specifically, the fingerprint information to be verified can be digitally signed by using a pre-generated service private key.

After the fingerprint information to be verified is digitally signed by using the pre-generated service private key, in a subsequent offline identity verification process, a pre-generated service public key also needs to be used to perform signature verification. The service public key and the service private key are generated by the client device in a secure environment after the client device monitors that the user enables the permission to perform offline payment in the offline identity verification manner, and are stored in the secure environment.

To further ensure information security, in the offline identity verification method provided in this application, the fingerprint information to be verified can be first encrypted to obtain ciphertext information of the fingerprint information to be verified, and then the ciphertext information is digitally signed by using the pre-generated service private key. As such, it can be ensured that in a subsequent signature verification process, signature verification is performed on the fingerprint information to be verified in a ciphertext form. Because the fingerprint information to be verified is encrypted, even if the fingerprint information to be verified is leaked, privacy leakage of the user is not caused, and security of privacy data of the user is further ensured.

S104: Send the signed identity information to be verified to the secure environment, so signature verification is performed on the signed identity information to be verified in the secure environment, and after signature verification on the signed identity information to be verified is passed, the identity information to be verified is compared with standard identity information stored in the secure environment to obtain a first comparison result.

The client device can send the signed fingerprint information to be verified to the secure environment, and perform signature verification on the signed fingerprint information to be verified in the secure environment. The secure environment is a security region divided by the terminal device. In addition, the secure environment and another system environment in the terminal device are data-isolated from each other. A signature verification process is performed in the secure environment, thereby further ensuring data security.

The secure environment mentioned in this specification can be a trusted execution environment (TEE).

In the secure environment, signature verification is performed on the fingerprint information to be verified by using the pre-generated service public key. If signature verification is not passed, identity verification fails. After the signed fingerprint information to be verified passes signature verification, the fingerprint information to be verified can be compared with the standard fingerprint information, stored in the secure environment, previously entered by the user and used to perform identity verification. After monitoring that the user enables the permission to perform offline payment in the offline identity verification manner, the client device collects the standard fingerprint information entered by the user and stores the standard fingerprint information into the secure environment.

It can be understood from the above-mentioned content that the fingerprint information to be verified collected by the terminal device can have two different cases, that is, the fingerprint information to be verified is encrypted, or is not encrypted. In a case in which the fingerprint information to be verified is not encrypted, the standard fingerprint information pre-stored in the secure environment and used to perform identity verification is standard fingerprint information in a plaintext form. Therefore, after the signed fingerprint information to be verified passes signature verification, the fingerprint information to be verified can be directly compared with the standard fingerprint information to obtain the first comparison result. If the fingerprint information to be verified is encrypted, and the user enters the standard fingerprint information, the client device needs to encrypt the entered standard fingerprint information, and store ciphertext information in the secure environment. When subsequently performing identity verification, the client device can compare the ciphertext information of the fingerprint information to be verified with the ciphertext information of the standard fingerprint information to obtain the first comparison result.

S106: Perform offline identity verification on the user according to the first comparison result.

In the secure environment, after the fingerprint information to be verified is compared with the standard fingerprint information stored in the secure environment, the first comparison result is obtained. If the first comparison result is "different", that is, the fingerprint information to be verified is different from the standard fingerprint information stored in the secure environment, user identity verification fails. If the first comparison result is "same", that is, the fingerprint information to be verified is the same as the standard fingerprint information stored in the secure environment, the user passes identity verification and continues to perform the service.

It is worthwhile to note that, after the client device monitors that the user enables the permission to perform offline payment in the offline identity verification manner, the service public key and the service private key generated in the secure environment can be not only applied to an offline identity verification process, but also applied to an online identity verification process.

Specifically, when the user performs an online payment service, the client device obtains second fingerprint information to be verified of the user that is collected by the terminal device in an online state, and signs and sends the second fingerprint information to be verified to the server. The client device sent the standard fingerprint information entered by the user to the server for storage when the user previously enabled the permission to perform offline payment in the offline identity verification manner. In addition, the service public key pre-generated in the secure environment can also be sent to the server for storage. Therefore, after digitally signing the second fingerprint information to be verified by using the service private key, the client device sends the second fingerprint information to be verified to the server. The server can perform signature verification on the second fingerprint information to be verified by using the stored service public key, after signature verification is passed, compare the second fingerprint information to be verified with the standard fingerprint information stored in the server to obtain a second comparison result, and determine, according to the second comparison result, whether the user continues to perform the service. If the second comparison result is "same", that is, the second fingerprint information to be verified is the same as the standard fingerprint information stored in the server, the user passes identity verification, and payment succeeds.

Further, the second fingerprint information to be verified that is collected by the terminal device can be divided into two different cases. In the first case, the second fingerprint information to be verified needs to be encrypted first. Specifically, when the user enters the standard fingerprint information, the server encrypts the standard fingerprint information of the user by using an encryption algorithm and stores ciphertext information to the server, and the server sends data of the encryption algorithm to the client device. Certainly, the data of the encryption algorithm can alternatively be sent by the server to the client device for storage when the user enables the above-mentioned permission. It is worthwhile to note that the data of the encryption algorithm mentioned in this specification are actually an encryption algorithm, which can be specifically understood as that the server delivers the used encryption algorithm to the client device in a form of data.

In the process of performing identity verification on the user, when obtaining the second fingerprint information to be verified that is collected by the terminal device, the client device needs to encrypt the second fingerprint information to be verified by using the same encryption algorithm, and send the encrypted second fingerprint information to be verified to the server. The server compares ciphertext information of the encrypted second fingerprint information to be verified with ciphertext information of the pre-stored standard fingerprint. If the comparison succeeds, the user pays successfully.

In the other case, the second fingerprint information to be verified is not encrypted. In the identity verification process, plaintext information of the second fingerprint information to be verified that is obtained by the client device is directly sent to the server, and is compared with plaintext information of the standard fingerprint of the user pre-stored in the server. It is determined, according to a comparison result, whether the user continues to perform the service. If the comparison result is "different", identity verification fails. If the comparison result is "same", identity verification is passed, and the user pays successfully.

The encryption algorithm can include a hash encryption algorithm (Hash), a message digest algorithm (MD5), etc. This specification sets no limitation on a specific encryption algorithm used.

It can be understood from the above-mentioned content that, in the offline state, because the standard identity information used by the user for identity verification is pre-stored in the local secure environment, when the user is in the offline state, the identity information to be verified of the user can still be collected. By comparing the identity information to be verified of the user and the standard identity information in the local secure environment, offline identity verification on the user is completed, thereby ensuring that the user can still perform identity verification in the offline state, thereby improving payment service execution efficiency of the user and bringing convenience to the user. In addition, the standard identity information is stored in the secure environment, and comparison between the identity information to be verified of the user and the standard identity information is also completed in the secure environment. As such, it can be ensured that privacy data of the user is not leaked, and information security of the user is further ensured.

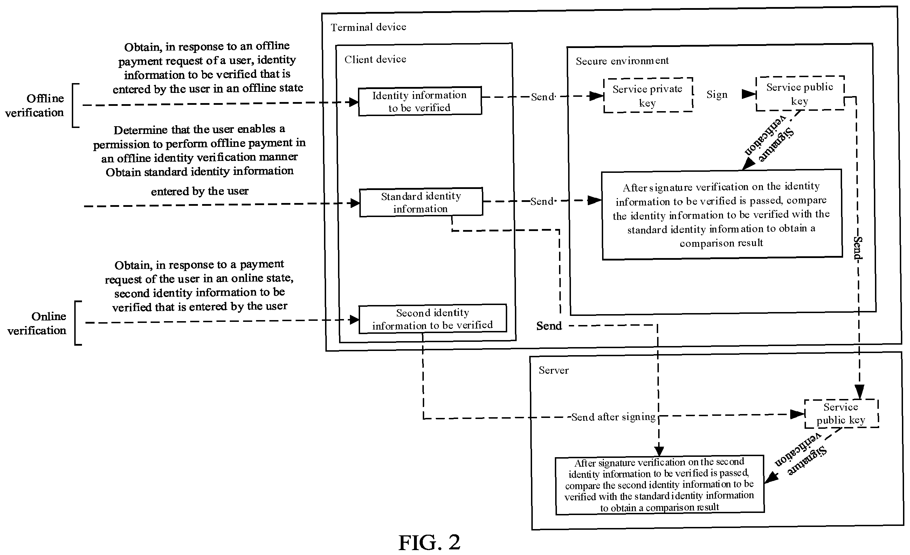

For ease of understanding, FIG. 2 is a schematic diagram illustrating a running manner of a terminal device of an offline identity verification method, according to this specification.

FIG. 2 is a schematic diagram illustrating a running manner of a terminal device of an offline identity verification method, according to this specification, specifically includes the following content: When a user is online, a client device monitors whether the user enables a permission to perform a service offline corresponding to the service request; and if it is monitored that the user does not enable the permission, prompt information pops up to prompt the user to authorize the permission. When the user enables the permission to perform a service offline, the client device generates a corresponding service public key and service private key in a secure environment, stores them in the secure environment, and sends the service public key to a server for storage. In addition, the client device collects standard identity information entered by the user, and separately sends the standard identity information to the secure environment and the server for storage.

When the user performs a payment service offline, identity verification needs to be performed. The client device obtains identity information to be verified of the user that is collected by a terminal device in an offline state, and signs and sends the identity information to be verified of the user to the secure environment. Further, to ensure data security, the identity information to be verified can be encrypted and then digitally signed. In the secure environment, the pre-generated service public key is used to perform signature verification on the identity information to be verified. If the client device is attacked, and the identity information to be verified is not signed by using the service private key in the secure environment, signature verification fails. After signature verification is passed, the fingerprint information to be verified is compared with the standard fingerprint information stored in the secure environment to obtain a first comparison result. If the first comparison result is "same", user identity verification is passed, and payment succeeds. If the first comparison result is "different", user identity verification is not passed, and payment fails.

When the user performs an online payment service, the client device obtains second fingerprint information to be verified of the user that is collected by the terminal device in an online state, and signs and sends the second fingerprint information to be verified to the server. When the user previously enabled the permission to perform a service offline, the client device has sent the standard fingerprint information of the user and the service public key generated in the secure environment to the server for storage. Therefore, the server performs signature verification on the second fingerprint information to be verified, compares the second fingerprint information to be verified with the standard fingerprint information after signature verification is passed, to obtain a second comparison result, and determines, according to the second comparison result, whether the user pays successfully.

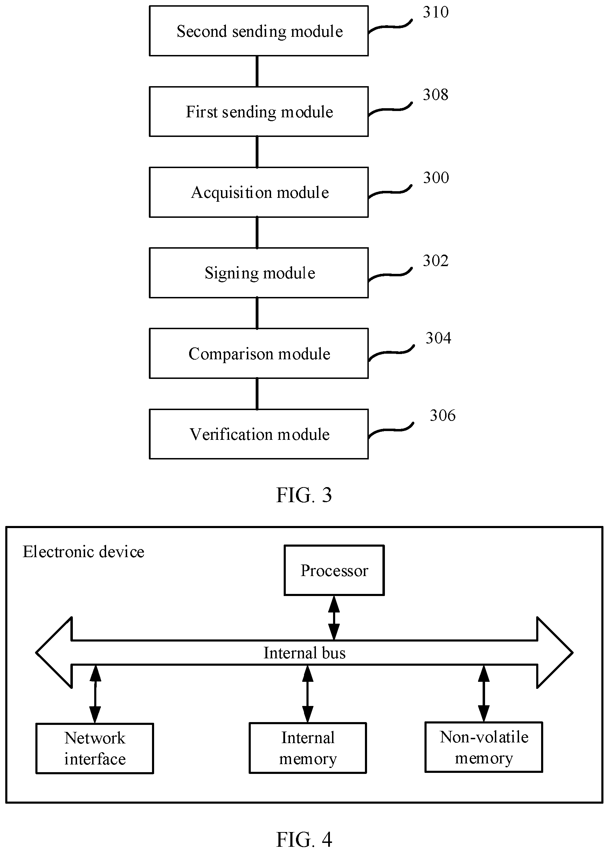

The above-mentioned describes the offline identity verification method provided in one or more embodiments of this specification. Based on the same idea, this specification further provides a corresponding offline identity verification apparatus, as shown in FIG. 3.

FIG. 3 is a schematic diagram illustrating an offline identity verification apparatus, according to this specification, where a secure environment is disposed in the apparatus, and the secure environment and another system environment in the apparatus are data-isolated from each other; and the apparatus includes: an acquisition module 300, configured to: obtain, in response to an offline payment request of a user, identity information to be verified of the user that is collected by the apparatus in an offline state; a signing module 302, configured to sign the identity information to be verified to obtain signed identity information to be verified; a comparison module 304, configured to: send the signed identity information to be verified to the secure environment, so signature verification is performed on the signed identity information to be verified in the secure environment, and after signature verification on the signed identity information to be verified is passed, the identity information to be verified is compared with standard identity information stored in the secure environment to obtain a first comparison result; and a verification module 306, configured to perform offline identity verification on the user according to the first comparison result.

Optionally, the acquisition module 300 is configured to: monitor, in response to the offline payment request of the user, whether the user enables a permission to perform offline payment in an offline identity verification manner; and if it is determined that the user enables the permission, obtain the identity information to be verified of the user that is collected by the apparatus in the offline state.

Optionally, the apparatus further includes: a first sending module 308, configured to collect, in response to a permission enabling request sent by the user in an online state for the permission, standard identity information entered by the user; and send the standard identity information to a server, so the server stores the standard identity information.

Optionally, the signing module 302 is configured to digitally sign the identity information to be verified by using a service private key.

Optionally, the comparison module 304 is configured to perform signature verification, in the secure environment, on the signed identity information to be verified by using a service public key stored in the secure environment.

Optionally, the signing module 302 is configured to encrypt the identity information to be verified to obtain encrypted identity information to be verified; and sign the encrypted identity information to be verified to obtain signed identity information to be verified.

Optionally, the comparison module 304 is configured to compare the encrypted identity information to be verified with encrypted standard identity information stored in the secure environment to obtain the first comparison result.

Optionally, the first sending module 308 is further configured to send the standard identity information and a pre-generated service public key to the server, so the server stores the standard identity information and the service public key.

The apparatus further includes: a second sending module 310, configured to: obtain, in response to a payment request sent by the user in the online state, second identity information to be verified of the user that is collected by the apparatus in the online state; sign the second identity information to be verified by using a service private key, to obtain signed second identity information to be verified; and send the signed second identity information to be verified to the server, so the server performs signature verification, by using the service public key, on the signed second identity information to be verified, and compares the second identity information to be verified with the standard identity information stored in the server after signature verification on the signed second identity information to be verified is passed, to obtain a second comparison result, so as to perform online identity verification on the user according to the second comparison result.

This specification further provides a computer-readable storage medium, where the storage medium stores a computer program, and the computer program can be used to perform the above-mentioned offline identity verification method provided in FIG. 1.

This specification further provides a schematic diagram illustrating a structure of an electronic device, shown in FIG. 4, corresponding to FIG. 1. As shown in FIG. 4, in terms of hardware, the electronic device includes a processor, an internal bus, a network interface, an internal memory, and a non-volatile memory, and certainly may further include hardware needed by another service. The processor reads a corresponding computer program from the non-volatile memory to the internal memory and then runs the computer program to implement the above-mentioned offline identity verification method shown in FIG. 1. Certainly, in addition to a software implementation, this specification does not rule out another implementation, for example, a logic component or a combination of software and hardware. To be specific, an execution body of the following processing procedure is not limited to each logical unit, and can be hardware or a logical component.

In the 1990s, whether a technical improvement is a hardware improvement (for example, an improvement to a circuit structure, such as a diode, a transistor, or a switch) or a software improvement (an improvement to a method procedure) can be clearly distinguished. However, with development of technologies, improvement to many existing method procedures can be considered as direct improvement to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. A designer autonomously performs programming to "integrate" a digital system onto a PLD, without requesting a chip manufacturer to design and manufacture a dedicated integrated circuit chip. In addition, at present, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. The memory controller can also be implemented as a part of the control logic of the memory. A person skilled in the art also knows that, in addition to implementing the controller by using only computer-readable program code, logic programming can be performed on a method step, so the controller implements a same function in a form of a logic gate, a switch, an application-specific integrated circuit, a programmable logic controller, an embedded microcontroller, etc. Therefore, the controller can be considered as a hardware component, and an apparatus included in the controller for implementing various functions can also be considered as a structure in the hardware component. Or the apparatus configured to implement various functions can even be considered as both a software module implementing the method and a structure in the hardware component.

The system, apparatus, module, or unit illustrated in the above-mentioned embodiments can be implemented by using a computer chip or an entity, or can be implemented by using a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, during implementation of this specification, functions of units can be implemented in the same or more software or hardware.

A person skilled in the art should understand that some embodiments of this specification can be provided as methods, systems, or computer program products. Therefore, this specification can use a form of hardware only embodiments, software only embodiments, or embodiments with a combination of software and hardware. In addition, this specification can be in a form of a computer program product implemented on one or more computer-usable storage media (including but not limited to a magnetic disk storage, a CD-ROM, an optical storage, etc.) including computer-usable program code.

This specification is described with reference to the flowcharts and/or block diagrams of the method, the device (system), and the computer program product based on the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided to a processor of a general-purpose computer, a dedicated computer, an embedded processor, or other programmable data processing device to produce a machine, such that instructions executed by a processor of a computer or other programmable data processing device produce an apparatus for implementing a function specified in one or more processes of the flowchart and/or one or more blocks of the block diagram.

These computer program instructions can be stored in a computer readable memory that can instruct the computer or the another programmable data processing device to work in a specific way, so the instructions stored in the computer readable memory generate an artifact that includes an instruction apparatus. The instruction apparatus implements a specific function in one or more processes in the flowcharts and/or in one or more blocks in the block diagrams.

These computer program instructions can be loaded onto the computer or another programmable data processing device, so a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, the computing device includes one or more processors (CPU), input/output interfaces, network interfaces, and internal memories.

The internal memory may include a form such as a non-permanent memory, a random access memory (RAM), or a non-volatile memory in a computer-readable medium, for example, a read-only memory (ROM) or a flash memory (flash RAM). The internal memory is an example of the computer-readable medium.

The computer-readable medium includes persistent, non-persistent, movable, and unmovable media that can store information by using any method or technology. The information can be a computer readable instruction, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD) or another optical storage, a cassette tape, a cassette magnetic disk storage, or another magnetic storage device, or any other non-transmission media, which can be configured to store information that can be accessed by a computing device. Based on the definition in this specification, the computer-readable medium does not include transitory media such as a modulated data signal and carrier.

It is worthwhile to further note that the terms "include", "comprise", or any other variant thereof are intended to cover a non-exclusive inclusion, so a process, a method, a product, or a device that includes a list of elements not only includes those elements but also includes other elements which are not expressly listed, or further includes elements inherent to such process, method, product, or device. An element preceded by "includes a..." does not, without more constraints, preclude the existence of additional identical elements in the process, method, article, or device that includes the element.

A person skilled in the art should understand that embodiments of this specification can be provided as a method, a system, or a computer program product. Therefore, a form of hardware only embodiments, software only embodiments, or embodiments with a combination of software and hardware can be used in this specification. In addition, this specification can be in a form of a computer program product implemented on one or more computer-usable storage media (including but not limited to a magnetic disk storage, a CD-ROM, an optical storage, etc.) including computer-usable program code.

This specification can be described in a general context of a computer-executable instruction executed by a computer, for example, a program module. Typically, program modules include routines, programs, objects, components, data structures, etc. that perform specific tasks or implement specific abstract data types. This specification can also be practiced in a distributed computing environment in which tasks are performed by remote processing devices connected via a communication network. In the distributed computing environment, a program module can be located in local and remote computer storage media including a storage device.

Embodiments in this specification are all described in a progressive manner, for same or similar parts in embodiments, mutual reference can be made to these embodiments, and each embodiment focuses on a difference from other embodiments. Particularly, the system embodiments are basically similar to the method embodiments, and therefore are described briefly. For related parts, references can be made to some descriptions in the method embodiments.

## Claims

1. An offline identity verification method, wherein the method is applied to a terminal device, a secure environment is disposed in the terminal device, and the secure environment and another system environment in the terminal device are data-isolated from each other; and the method comprises:
obtaining, in response to an offline payment request of a user, identity information to be verified of the user that is collected by the terminal device in an offline state;
signing the identity information to be verified to obtain signed identity information to be verified;
sending the signed identity information to be verified to the secure environment, so signature verification is performed on the signed identity information to be verified in the secure environment, and after signature verification on the signed identity information to be verified is passed, the identity information to be verified is compared with standard identity information stored in the secure environment to obtain a first comparison result; and
performing offline identity verification on the user according to the first comparison result.

2. The method according to claim 1, wherein the obtaining, in response to an offline payment request of a user, identity information to be verified of the user that is collected by the terminal device in an offline state comprises:
monitoring, in response to the offline payment request of the user, whether the user enables a permission to perform offline payment in an offline identity verification manner; and
if it is determined that the user enables the permission, obtaining the identity information to be verified of the user that is collected by the terminal device in the offline state.

3. The method according to claim 2, wherein the method further comprises:
collecting, in response to a permission enabling request sent by the user in an online state for the permission, standard identity information entered by the user; and
sending the standard identity information to a server, so the server stores the standard identity information.

4. The method according to claim 1, wherein the signing the identity information to be verified comprises:
digitally signing the identity information to be verified by using a service private key.

5. The method according to claim 4, wherein the performing signature verification on the signed identity information to be verified comprises:
performing signature verification, in the secure environment, on the signed identity information to be verified by using a service public key stored in the secure environment.

6. The method according to claim 1, wherein the signing the identity information to be verified to obtain signed identity information to be verified comprises:
encrypting the identity information to be verified to obtain encrypted identity information to be verified; and
signing the encrypted identity information to be verified to obtain signed identity information to be verified; and
the comparing the identity information to be verified with standard identity information stored in the secure environment to obtain a first comparison result comprises:
comparing the encrypted identity information to be verified with encrypted standard identity information stored in the secure environment to obtain the first comparison result.

7. The method according to claim 3, wherein the sending the standard identity information to a server, so the server stores the standard identity information comprises:
sending the standard identity information and a pre-generated service public key to the server, so the server stores the standard identity information and the service public key; and
the method further comprises:
obtaining, in response to a payment request sent by the user in the online state, second identity information to be verified of the user that is collected by the terminal device in the online state;
signing the second identity information to be verified by using a service private key, to obtain signed second identity information to be verified; and
sending the signed second identity information to be verified to the server, so the server performs signature verification, by using the service public key, on the signed second identity information to be verified, and compares the second identity information to be verified with the standard identity information stored in the server after signature verification on the signed second identity information to be verified is passed, to obtain a second comparison result, so as to perform online identity verification on the user according to the second comparison result.

8. An offline identity verification apparatus, wherein a secure environment is disposed in the apparatus, and the secure environment and another system environment in the apparatus are data-isolated from each other; and the apparatus comprises:
an acquisition module, configured to: obtain, in response to an offline payment request of a user, identity information to be verified of the user that is collected by the apparatus in an offline state;
a signing module, configured to sign the identity information to be verified to obtain signed identity information to be verified;
a comparison module, configured to: send the signed identity information to be verified to the secure environment, so signature verification is performed on the signed identity information to be verified in the secure environment, and after signature verification on the signed identity information to be verified is passed, the identity information to be verified is compared with standard identity information stored in the secure environment to obtain a first comparison result; and
a verification module, configured to perform offline identity verification on the user according to the first comparison result.

9. A computer-readable storage medium, wherein the storage medium stores a computer program, and the computer program is executed by a processor to implement the method according to any one of claims 1 to 7.
